# EUROPEAN PATENT SPECIFICATION

(11) **EP 2 414 295 B1**
(45) Date of publication and mention of the grant of the patent: **03.10.2018**
(21) Application number: 10759204.0
(22) Date of filing: 18.03.2010
(51) Int. Cl.: C03B 5/235, F27B 3/20

(54) **CYCLICAL STOICHIOMETRIC VARIATION OF OXY-FUEL BURNERS IN GLASS FURNACES**
CYCLISCHE STÖCHIOMETRISCHE VARIATION VON SAUERSTOFF-BRENNSTOFF-BRENNERN IN GLASÖFEN
VARIATION STOECHIOMÉTRIQUE CYCLIQUE DES BRÛLEURS D'OXY-FUEL DANS LES FOURS DE VERRERIE

(30) Priority: 30.03.2009 US 413788
(43) Date of publication of application: 08.02.2012
(73) Proprietor: Linde AG, 80331 München (DE)
(72) Inventor: RICHARDSON, Andrew, P., Clinton NJ 08809 (US)
(74) Representative: Gellner, Bernd
(86) International application number: PCT/US2010/027796
(87) International publication number: WO 2010/114714

(56) References cited:
- US-A- 5 116 399
- US-A- 5 158 590
- US-A- 5 755 846
- US-A- 5 779 754
- US-A- 5 954 498
- US-B1- 6 398 547
- US-B2- 7 168 269
- QUIRK R: "REVIEW OF CONTROLS OF NOX", GLASS TECHNOLOGY, SOCIETY OF GLASS TECHNOLOGY, SHEFFIELD, GB, vol. 38, no. 4, 1 August 1997 (1997-08-01) , pages 112-115, XP000691693, ISSN: 0017-1050

## Description

The present invention relates to staging of combustion in glass melters to reduce the formation of NOₓ; more particularly, the present invention relates to an end-port regenerative furnace as well as to a method for operating such end-port regenerative furnace.

Legislation and community concerns require the reduction of NOₓ levels. The use of oxygen to accomplish same is one option in reducing said levels.

US 5 779 754 discloses a standard end port regenerative furnace with first and second ports as well as first and second regenerators. The furnace also comprises first and second oxy-fuel burners, positioned on each side of the furnace between the charging and discharging ends of the furnace.

For a more complete understanding of embodiments of the present invention, reference may be had to the following drawing figures taken in conjunction with the description of the embodiments, of which:
FIG. 1 is a schematic showing a system embodiment of the invention; and
FIG. 2 is another schematic showing the system embodiment of the present invention.

Furnace and system embodiments of the present invention reduce the amount of NOₓ formed in glass furnaces, such as for example end-port regenerative furnaces.

The furnace and system embodiments provide an efficient means of partially firing a furnace with oxygen and reducing NOₓ levels.

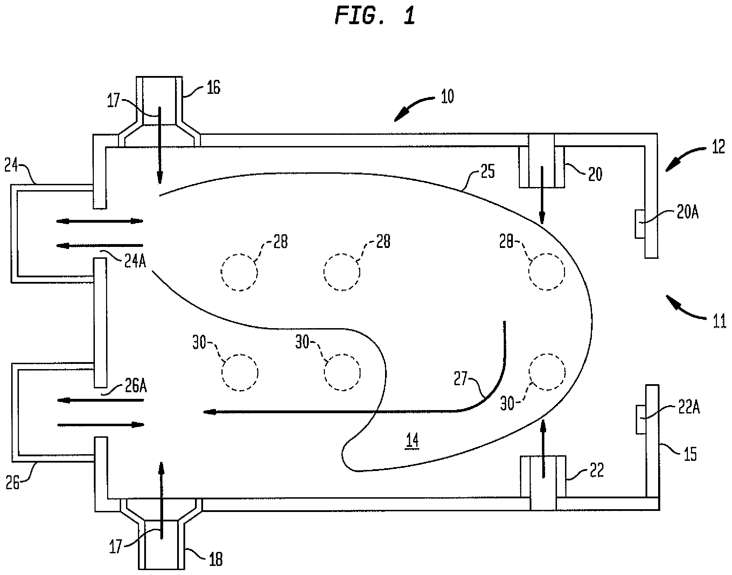

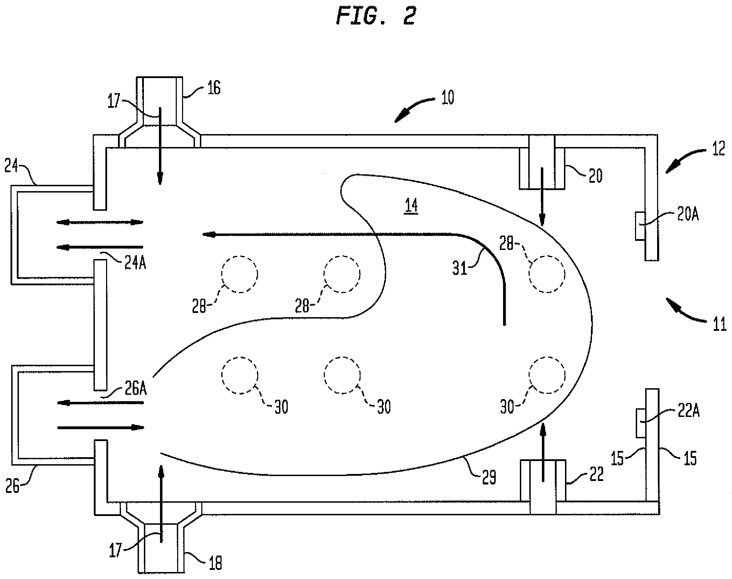

Referring to FIGS. 1 and 2, a furnace of the present invention is shown generally at 10 having a system embodiment of the present invention employed therewith. The furnace 10 includes an exterior wall 12 constructed and arranged to provide an interior combustion chamber 14.

Chargers 16, 18 are connected to the furnace 10 for communication with the combustion chamber 14 so as to provide a feed of the raw glass forming materials or other charging material (not shown) to the furnace 10, and in particular the combustion chamber 14.

A downstream end of the furnace 10 includes a discharge port 11 or end of the furnace where the melted glass is withdrawn, often referred to as a throat. A pair of burners 20, 22 are disposed for operation at the downstream end of the furnace 10. The burner 20 may be an oxy-fuel burner for use with oil or gas fuel. The burner 20 can be operated as a fuel rich burner, i.e. a burner with an excess amount of fuel; or as an oxidizing burner, i.e. a burner using excess amounts of oxygen (O₂). The burner 22 is also mounted at the downstream end of the furnace 10, for example at an opposed side of the furnace wall 12 as shown in the FIGS., so that the discharge from the burner 22 is in registration with burner 20. The burner 22 may also be operated on oil or gas fuel and can be run fuel rich or fuel lean/oxidizing (as defined above with respect to the burner 20). Both of the burners 20, 22 are constructed and arranged for cyclical operation. That is, the burners 20, 22 can operate alternatively as fuel rich burners or oxidizing burners.

At an end of the furnace 10 opposed to the discharge port 11 there is disposed a pair of regenerators shown generally at 24, 26. Each of the regenerators 24, 26 is connected to a corresponding port, each of which is in communication with the combustion chamber 14. That is, the regenerator 24 is connected to port 24A. The regenerator 26 is connected to port 26A. The regenerators 24, 26 have fuel injectors (not shown) at the ports 24A, 26A which operate on oil or gas fuel, as the melting application requires. Arrows at the ports 24A, 26A indicate flow with respect to their associated regenerators and ports, and the operation of the furnace 10.

While in operation (i.e. not including the short length of time each regenerator 24, 26 is switching from exhausting to firing, and vice versa) one of the regenerators 24, 26 is firing (at a firing port), while the other of the regenerators 24, 26 is exhausting (at an exhaust port). Each of the ports 24A, 26A is equipped with fuel injectors (not shown) which operate only when the corresponding one of the ports is in firing mode. When in firing mode, combustion air flows through the regenerator and is preheated so that a high combustion temperature can be achieved for efficient operation of the furnace 10. The preheated air flows through the firing port and into the combustion chamber 14 where it reacts with the fuel from the firing port fuel injectors creating a flame. The flame heats the furnace structure and glass (not shown) to be melted. The exhaust port passes the hot furnace exhaust gases into a second regenerator which is heated up by the passage of these gases. After a period of 10-30 minutes (more typically 15-25 minutes) the flows of gases through the ports are reversed, so that combustion air now flows through the preheated regenerator (ie, the one that was previously exhausting) and the hot furnace exhaust now flows out through the heat depleted regenerator (i.e., the one that was previously firing) so as to recover waste energy.

More particularly and referring to FIG. 1, in operation, with the combustion chamber 14 of the furnace 10 provided with a feed of raw glass forming material represented by arrow 17 from the chargers 16, 18, the regenerator 24 at its burner at the port 24A provides the flame into the combustion chamber 14 for melting the feed. When the burner at the port 24A is actuated, the burner 20 is operated in a fuel rich mode during the period of time that the firing port 24A is in operation. A combustion footprint 25 or primary flame is shown generally for regenerator 24. Concurrent therewith, the burner 22 is operating in a fuel lean or oxidizing mode so as to combust as completely as possible any fuel remaining from any incomplete combustion of the fuel rich burner 20 and the burner at port 24A. Thereafter, a combustion products flow 27 is removed through the port 26A of the regenerator 26.

This process will operate for approximately 15-25 minutes before the process is reversed as discussed below with respect to FIG. 2.

Referring to FIG. 2, at such time as a select amount of time has elapsed for the operation described above in FIG. 1, such as for example 20 minutes, regenerator 26 is now set to operate in firing mode and regenerator 24 is now set to operate in a exhaust mode. The burners 26A will begin to fire to form a flame in the combustion chamber 14 and the burner at the port 24A will be turned off. Concurrent therewith, the burner 22 will operate in a fuel rich mode (non-oxidizing), while the burner 20 will shift to an oxidizing (fuel lean) mode so that there is sufficient oxygen to combust any remaining combustion products in the combustion chamber 14. A combustion footprint 29 or primary flame is shown generally for regenerator 26. With the regenerator 24 in exhaust mode, a combustion products flow represented by arrow 31 from the combustion chamber 14 is generated. The flow 31 is removed through the port 24A of the regenerator 24.. After a select amount of time, the process is reversed to that as discussed with respect to FIG. 1.

The burners 20, 22 may be mounted in the breast walls, that is, along sides of the furnace 10 parallel to the initial flame direction from the regenerators 24, 26, and/or in a crown of the furnace. Alternatively, the burners 20, 22 can be mounted in an end wall 15 as shown at 20A,22A, i.e., opposed to the ports 24A, 26A and proximate the discharge port 11.

Burners 28, 30 show an approximate position for such burners in the crown of the furnace 10. One or a plurality of the burners 28, 30 arranged in pairs along the furnace crown may be used. The burners 28, 30 will fire approximately perpendicular to an initial flame direction from the regenerators 24, 26 so that the oxy-fuel flame of burners 28, 30 fires proximate or into the respective combustion footprint 25, 29, i.e. the burner 28 firing into the footprint 25, while the burner 30 fires into the footprint 29.

It is possible to have a combination of breast wall 20, 22 and roof mounted burners 28,30 in a given furnace. This has the advantage of providing better mixing and consequently efficient reaction between the fuel rich and oxidizing streams. For example, in Fig 2. when port 26 is in firing mode the oxygen rich flames from burners 20 and burners 28, and fuel rich flames from burners 22 and burners 30 will interact more effectively with the streams of combustion products 31 within the furnace 14. This is because both the oxidizing burners 20, 28 and the fuel rich burners 22, 30 are introduced substantially perpendicular to each other and also to the burners in port 26A and the main stream of combustion products 31 in the furnace 14.

In this invention any oxy-fuel burners on the firing side of the melter would be operated fuel rich, and oxy-fuel burners on the exhaust side will be operated fuel lean.

In summary, a firing side of the furnace 10 will have the oxy-fuel burners firing in a fuel rich manner, i.e. with insufficient oxygen for complete combustion. At an opposed side of the furnace 10 that is being used to exhaust the combustion products, i.e. the exhaust side of the furnace, burners at the opposed side will be fired with an excess of oxygen so as to combust as completely as possible any fuel remaining from the incomplete combustion from the firing side of the furnace. The cycling between the regenerators 24, 26 and the burners 20, 22 can be done at intervals of 15-25 minutes, for example.

At least one of the oxy-fuel burners 20,22 will be in operation on each of the firing and exhaust sides of the furnace 10. Such burners 20,22 should be sufficiently spaced from the exhaust ports 24A,26A so that there is sufficient time and space available for reaction to take place between the excess fuel from the firing side of the furnace 10 and the excess oxygen from the oxy-fuel burner on the exhaust side of the furnace 10. Furthermore, the fuel rich oxy-fuel burner may be disposed on the firing side of the furnace 10 located to create a fuel rich mixture in the applicable one of the combustion footprints 25,29 at the peak temperature regions in the furnace 10, i.e. at a furnace hot spot. Accordingly, suitable locations for these burners 20,22 are approximately between 20%-80% of the length of the glass melter from ports 24A,26A.

The oxy-fuel burners 20,22 may be disposed in end-port furnaces at a location 70-80% of the furnace length from the ports 24A,26A. At this position furnace crown temperatures are at or near their maximum in the furnace 10, which is commonly referred to as the furnace hot spot. At the hot spot there is typically an upwelling of low density heated glass from a bottom (not shown) of the furnace 10. On a surface of the glass bath (not shown) at the hot spot, the glass is further heated and the upwelled glass is forced partially towards the firing 24A and exhaust ports 26A, and partially toward the glass discharge port 11 or throat. Surface movement of the glass melt towards the firing port 24A and exhaust port 26A helps to restrict movement of any batch material towards the glass discharge port 11 before said batch material has been sufficiently melted. This upwelling of glass and resulting convection currents in the glass bath necessary for high performance operation of the furnace are promoted by maintenance of the hot spot. By using oxy-fuel burners 20, 22 at or near the hot spot additional energy is imparted directly to the desired hot spot to thus maintain the location of the hot spot through the firing cycle of furnace operational changes. Furnace stability is improved by maintaining and controlling the hot spot. The hot spot is an effective location for the addition of oxy-fuel energy because it additionally improves or reinforces the natural melting processes in the combustion chamber 14 of the furnace.

There is however a maximum amount of oxy-fuel energy that can be introduced to the hot spot before the crown superstructure temperatures are raised excessively. In addition, the flow paths of combustion products 27, 31 indicate that were a fuel rich region to be introduced on the firing side near the hot spot, ie, from the burner 20 on FIG. 1, the fuel rich region would be limited to a relatively short region as the fuel rich combustion products are swept across the combustion chamber 14 in flow paths 27,31.

With regard to NOx in such a system, NOx formation is inhibited in fuel rich regions due partially to the absence of oxygen and as such, if a size of the fuel rich region is increased then the final amount of NOx produced would be reduced. Therefore, to reduce NOx formation the size of the fuel rich region is increased which is achieved by the use of the oxy-fuel burners 20,22 closer to the firing and exhaust ports 24A, 26A.

As a result of the need for fuel efficient operation, the combustion reactions are essentially complete prior to exit of the combustion products 27,31 into the respective exhaust port 24A,26A. Consequently, additional oxy-fuel energy is not introduced proximate the exhaust port as space and time is needed for combustion to occur and be completed. Furthermore, the fuel rich combustion products following the paths 27,31, need to mix, interact and react as completely as possible with the oxygen rich flames at the respective exhaust side of the furnace so that the excess fuel in the fuel rich combustion products is consumed as much as possible within the furnace. Such mixing, etc. at a distance of 30-40% of the melter length from the ports 24A, 26A is a good location, as this is sufficiently distant from the ports 24A, 26A to prevent unreacted oxidizing gases or fuel rich combustion products from exiting the furnace 10 and for heat to be liberated within the furnace.

The furnace and system of the present invention will reduce the NOx emissions from, for example, end-port furnaces by the use of oxy-fuel burners 20,22 in a staged manner. The system obviates the need for costly secondary NOx abatement equipment to be mounted to the furnace 10.

Use of oxygen in furnaces furthermore enables increased production rates for the furnace 10 and allows the furnace to continue to operate where the primary air-fuel combustion is deteriorating. Use of the system embodiments reduces the impact of NOx emissions, allows greater utilization of furnace equipment and profit to the customer, while avoiding capital expenditure associated with furnace modification or repair.

Switching the burners 20, 22 from fuel rich to oxidizing (fuel lean) avoids the need for turning the burners 20, 22 on and off and thus, reduces thermal cycling of components which can lead to failure and the need for secondary cooling media for the burners 20, 22.

It will be understood that the embodiments described herein are merely exemplary and that a person skilled in the art may make variations and modifications without departing from the scope of the invention. It should be understood that the embodiments described above are not only in the alternative, but may be combined.

## Claims

1. An end-port regenerative furnace (10), comprising:
- a housing;
- a combustion chamber (14) disposed within the housing;
- a charging end associated with the combustion chamber (14);
- a first port (24A) and a second port (26A) at the housing for communication with the combustion chamber (14) at the charging end;
- a discharging end associated with the combustion chamber (14) and spaced apart from the charging end;
- a first regenerator (24) disposed at the charging end and in communication with the combustion chamber (14) through the first port (24A), the first regenerator (24) adapted for cyclical operation between a firing mode wherein fuel is injected proximate preheated combustion air passing through the first port (24A) into the combustion chamber (14), and an exhaust mode wherein products of combustion are exhausted from the combustion chamber (14) through the first port (24A);
- a first oxy-fuel burner assembly (20) disposed between the charging and discharging ends and adapted for cyclical operation among a fuel rich mode and a fuel lean mode concurrent with the cyclical operation of the first regenerator (24);
- a second regenerator (26) disposed at the charging end and in communication with the combustion chamber (14) through the second port (26A), the second regenerator (26) adapted for cyclical operation between the firing mode wherein fuel is injected proximate preheated combustion air passing through the second port (26A) into the combustion chamber (14), and the exhaust mode wherein products of combustion are exhausted from the combustion chamber (14) through the second port (26A); and
- a second oxy-fuel burner assembly (22) disposed between the charging and discharging ends and adapted for cyclical operation among a fuel rich mode and a fuel lean mode concurrent with the cyclical operation of the second regenerator (26);
wherein
- the first oxy-fuel burner assembly (20) is operable in a fuel rich mode on a firing side of the furnace (10), said fuel rich mode being concurrently with the firing mode of the first regenerator (24) for a time interval to provide fuel rich combustion and a fuel rich combustion product flow within the combustion chamber (14), and
- the second oxy-fuel burner assembly (22) is operable in a fuel lean mode on an exhaust side of the furnace (10), said fuel lean mode being concurrently with the exhaust mode of the second regenerator (26) for the time interval to provide additional oxygen to react with the fuel rich combustion product flow and form an exhaust flow from the combustion chamber (14);
after said time interval
- the first oxy-fuel burner assembly (20) is operable in the fuel lean mode on the exhaust side and the first regenerator (24) is operable in the exhaust mode, and
- the second oxy-fuel burner assembly (22) is operable in the fuel rich mode on the firing side and the second regenerator (26) is operable in the firing mode for another time interval to reverse the combustion flow and the exhaust flow within the combustion chamber (14) to cycle between the first and second regenerators (24, 26).

2. The regenerative furnace according to claim 1, wherein the first oxy-fuel burner assembly (20) and the second oxy-fuel burner assembly (22) are each disposed at an opposing sidewall of the housing.

3. The regenerative furnace according to claim 1, wherein the first oxy-fuel burner assembly (20) and the second oxy-fuel burner assembly (22) are each disposed in a crown of the housing.

4. The regenerative furnace according to claim 1, wherein the first oxy-fuel burner assembly (20) and the second oxy-fuel burner assembly (22) are each disposed at the discharging end of the combustion chamber (14).

5. The regenerative furnace according to claim 1, wherein the first oxy-fuel burner assembly comprises a plurality of first oxy-fuel burners (20) disposed along a first side of the housing for operation in the combustion chamber (14).

6. The regenerative furnace according to claim 5, wherein the second oxy-fuel burner assembly comprises a plurality of second oxy-fuel burners (22) disposed at an opposite side of the housing for operation in the combustion chamber (14).

7. The regenerative furnace according to claim 1, wherein the first oxy-fuel burner assembly comprises at least one first oxy-fuel burner (20) disposed in at least a crown of the housing, a sidewall of the housing, and the discharging end of the housing such that any of said first oxy-fuel burners (20) combust in the combustion chamber (14) of the housing.

8. The regenerative furnace according to claim 7, wherein the second oxy-fuel burner assembly comprises at least one second oxy-fuel burner (22) disposed in at least the crown of the housing, the sidewall of the housing, and the discharge end of the housing such that any of said second oxy-fuel burners (22) combust in the combustion chamber (14) of the housing.

9. The regenerative furnace according to claim 1, wherein the first regenerator (24) operates in the firing mode, and the second regenerator (26) operates in the exhaust mode for the time interval of ten minutes to thirty minutes, in particular of fifteen minutes to 25 minutes.

10. The regenerative furnace according to claim 9, wherein the second regenerator (26) operates in the firing mode, and the first regenerator (24) operates in the exhaust mode for the another time interval of ten minutes to thirty minutes, in particular of fifteen minutes to 25 minutes.

11. The regenerative furnace according to claim 1, wherein the first regenerator (24) and the second regenerator (26) are adapted to alternate sequentially between the firing and exhaust modes.

12. A method for operating an end-port regenerative furnace (10) comprising a firing side and an exhaust side, said furnace (10) having first and second regenerators (24, 26) each of which is operable in a firing mode and an exhaust mode, the method comprising:
- providing a first oxy-fuel burner (20) adapted to operate in a fuel-rich mode and a fuel-lean mode concurrent with the operable mode of the first regenerator (24);
- providing a second oxy-fuel burner (22) adapted to operate in a fuel-rich mode and a fuel-lean mode concurrent with the operable mode of the second regenerator (26);
- operating the first regenerator (24) in the firing mode and the first oxy-fuel burner (20) in the fuel-rich mode on the firing side;
- operating the second regenerator (26) in the exhaust mode and the second oxy-fuel burner (22) in the fuel-lean mode on the exhaust side;
- alternating the operable modes of the first and second regenerators (24, 26) and the first and second oxy-fuel burners (20, 22), wherein
-- the first regenerator (24) is operating in the exhaust mode and the first oxy-fuel burner (20) is operating in the fuel-lean mode on the exhaust side, and
-- the second regenerator (26) is operating in the firing mode and the second oxy-fuel burner (22) is operating in the fuel-rich mode on the firing side; and
- cycling the operating modes of the first and second regenerators (24, 26) and the first and second oxy-fuel burners (20, 22) for successive time intervals for providing cyclical flows between the first and second regenerators (24, 26).

13. The method according to claim 12, further comprising providing at least one oxy-fuel combustion flame from at least one of a crown and a sidewall of the regenerative furnace (10) to coact with at least one of the first and second regenerators (24, 26).

14. The method according to claim 12, wherein the alternating the operating modes occurs after a time interval, in particular from ten minutes to thirty minutes, for example from fifteen minutes to 25 minutes, has elapsed.

15. The method according to claim 12, wherein the operating the first regenerator (24) and the operating the second regenerator (26) occurs simultaneously.

## Patentansprüche

1. Endanschluss-Regenerativofen (10), umfassend:
ein Gehäuse;
eine Brennkammer (14), die innerhalb des Gehäuses angeordnet ist;
ein Beladungsende, das mit der Brennkammer (14) verknüpft ist;
einen ersten Anschluss (24A) und einen zweiten Anschluss (26A) an dem Gehäuse zur Verbindung mit der Brennkammer (14) am Beladungsende;
ein Abgasende, das mit der Brennkammer (14) verknüpft ist und von dem Beladungsende beabstandet ist;
einen ersten Regenerator (24), der am Beladungsende angeordnet ist und über den ersten Anschluss (24A) mit der Brennkammer (14) in Verbindung steht, wobei der erste Regenerator (24) für einen zyklischen Betrieb zwischen einem Feuerungsmodus, wobei Brennstoff in die Nähe der vorgewärmten Brennluft durch den ersten Anschluss (24A) in die Brennkammer (14) eingespritzt wird, und einem Abgasmodus, wobei Verbrennungsprodukte von der Brennkammer (14) durch den ersten Anschluss (24A) abgelassen werden, ausgelegt ist;
eine erste Sauerstoff-Brennstoff-Brenneranordnung (20), die zwischen den Beladungs- und Ablassenden angeordnet ist und für einen zyklischen Betrieb zwischen einem brennstoffreichen Modus und einem brennstoffarmen Modus gleichzeitig mit dem zyklischen Betrieb des ersten Regenerators (24) ausgelegt ist;
einen zweiten Regenerator (26), der am Beladungsende angeordnet ist und mit der Brennkammer (14) durch den zweiten Anschluss (26A) in Verbindung steht, wobei der zweite Regenerator (26) für einen zyklischen Betrieb zwischen dem Feuerungsmodus, wobei Brennstoff in der Nähe der vorgewärmten Verbrennungsluft, die durch den zweiten Anschluss (26A) in die Brennkammer (14) gelangt, und dem Abgasmodus, wobei Verbrennungsprodukte von der Brennkammer (14) durch den zweiten Anschluss (26A) abgelassen werden, ausgelegt ist; und
eine zweite Sauerstoff-Brennstoff-Brenneranordnung (22), die zwischen den Beladungs- und Ablassenden angeordnet ist und für einen zyklischen Betrieb zwischen einem brennstoffreichen Modus und einem brennstoffarmen Modus gleichzeitig mit dem zyklischen Betrieb des zweiten Regenerators (26) ausgelegt ist; wobei
die erste Sauerstoff-Brennstoff-Brenneranordnung (20) in einem brennstoffreichen Modus auf einer Feuerungsseite des Ofens (10) betreibbar ist, wobei der brennstoffreiche Modus gleichzeitig mit dem Feuerungsmodus des ersten Regenerators (24) für ein Zeitintervall erfolgt, um eine brennstoffreiche Verbrennung und einen brennstoffreichen Verbrennungsproduktstrom innerhalb der Brennkammer (14) bereitzustellen, und
die zweite Sauerstoff-Brennstoff-Brenneranordnung (22) in einem brennstoffarmen Modus auf einer Abgasseite des Ofens (10) betreibbar ist, wobei der brennstoffarme Modus gleichzeitig mit dem Abgasmodus des zweiten Regenerators (26) für das Zeitintervall erfolgt, um zusätzlichen Sauerstoff zum Umsetzen mit dem brennstoffreichen Verbrennungsproduktstrom bereitzustellen und einen Abgasstrom von der Brennkammer (14) zu bilden;
wobei nach diesem Zeitintervall
die erste Sauerstoff-Brennstoff-Brenneranordnung (20) in dem brennstoffarmen Modus auf der Abgasseite betreibbar ist und der erste Regenerator (24) in dem Abgasmodus betreibbar ist und
die zweite Sauerstoff-Brennstoff-Brenneranordnung (22) in dem brennstoffreichen Modus auf der Feuerungsseite betreibbar ist und der zweite Regenerator (26) in dem Feuerungsmodus für ein anderes Zeitintervall betreibbar ist, um den Verbrennungsstrom und den Abgasstrom innerhalb der Brennkammer (14) schnell strömen zu lassen, um schnell zwischen dem ersten und zweiten Regenerator (24, 26) zu strömen.

2. Regenerativofen nach Anspruch 1, wobei die erste Sauerstoff-Brennstoff-Brenneranordnung (20) und die zweite Sauerstoff-Brennstoff-Brenneranordnung (22) jeweils an einer gegenüberliegenden Seitenwand des Gehäuses angeordnet sind.

3. Regenerativofen nach Anspruch 1, wobei die erste Sauerstoff-Brennstoff-Brenneranordnung (20) und die zweite Sauerstoff-Brennstoff-Brenneranordnung (22) jeweils in einer Krone des Gehäuses angeordnet sind.

4. Regenerativofen nach Anspruch 1, wobei die erste Sauerstoff-Brennstoff-Brenneranordnung (20) und die zweite Sauerstoff-Brennstoff-Brenneranordnung (22) jeweils am Ablassende der Brennkammer (14) angeordnet sind.

5. Regenerativofen nach Anspruch 1, wobei die erste Sauerstoff-Brennstoff-Brenneranordnung mehrere erste Sauerstoff-Brennstoff-Brenner (20) umfasst, die entlang einer ersten Seite des Gehäuses zum Betrieb in der Brennkammer (14) angeordnet sind.

6. Regenerativofen nach Anspruch 5, wobei die zweite Sauerstoff-Brennstoff-Brenneranordnung mehrere zweite Sauerstoff-Brennstoff-Brenner (22) umfasst, die auf einer gegenüberliegenden Seite des Gehäuses für den Betrieb in der Brennkammer (14) angeordnet sind.

7. Regenerativofen nach Anspruch 1, wobei die erste Sauerstoff-Brennstoff-Brenneranordnung mindestens einen ersten Sauerstoff-Brennstoff-Brenner (20) umfasst, der in mindestens einer Krone des Gehäuses, einer Seitenwand des Gehäuses und dem Ablassende des Gehäuses angeordnet ist, sodass jeder beliebige der ersten Sauerstoff-Brennstoff-Brenner (20) in der Brennkammer (14) des Gehäuses brennt.

8. Regenerativofen nach Anspruch 7, wobei die zweite Sauerstoff-Brennstoff-Brenneranordnung mindestens einen zweiten Sauerstoff-Brennstoff-Brenner (22) umfasst, der in mindestens der Krone des Gehäuses, der Seitenwand des Gehäuses und dem Ablassende des Gehäuses angeordnet ist, sodass jeder beliebige der zweiten Sauerstoff-Brennstoff-Brenner (22) in der Brennkammer (14) des Gehäuses brennt.

9. Regenerativofen nach Anspruch 1, wobei der erste Regenerator (24) im Feuerungsmodus arbeitet und der zweite Regenerator (26) im Abgasmodus für das Zeitintervall von zehn Minuten bis dreißig Minuten, insbesondere von fünfzehn Minuten bis, 25 Minuten arbeitet.

10. Regenerativofen nach Anspruch 9, wobei der zweite Regenerator (26) im Feuerungsmodus arbeitet und der erste Regenerator (24) im Abgasmodus für das weitere Zeitintervall von zehn Minuten bis dreißig Minuten, insbesondere von fünfzehn Minuten bis 25 Minuten arbeitet.

11. Regenerativofen nach Anspruch 1, wobei der erste Regenerator (24) und der zweite Regenerator (26) ausgelegt sind, um nacheinander zwischen dem Feuerungs- und Abgasmodus zu wechseln.

12. Verfahren zum Betreiben eines Endanschluss-Regenerativofens (10), umfassend eine Feuerungsseite und einer Abgasseite, wobei der Ofen (10) erste und zweite Regeneratoren (24, 26) aufweist, die jeweils in einem Feuerungsmodus und einem Abgasmodus betreibbar sind, wobei das Verfahren umfasst:
Bereitstellen eines ersten Sauerstoff-Brennstoff-Brenners (20), der zum Betreiben in einem brennstoffreichen Modus und einem brennstoffarmen Modus gleichzeitig mit dem Betriebsmodus des ersten Regenerators (24) ausgelegt ist;
Bereitstellen eines zweiten Sauerstoff-Brennstoff-Brenners (22), der zum Betrieb in einem brennstoffreichen Modus und einem brennstoffarmen Modus gleichzeitig mit dem Betriebsmodus des zweiten Regenerators (26) ausgelegt ist;
Betreiben des ersten Regenerators (24) im Feuerungsmodus und des ersten Sauerstoff-Brennstoff-Brenners (20) im brennstoffreichen Modus auf der Feuerungsseite;
Betreiben des zweiten Regenerators (26) im Abgasmodus und des zweiten Sauerstoff-Brennstoff-Brenners (22) im brennstoffarmen Modus auf der Abgasseite;
Wechseln zwischen den Betriebsarten des ersten und des zweiten Regenerators (24, 26) und des ersten und des zweiten Sauerstoff-Brennstoff-Brenners (20, 22), wobei
der erste Regenerators (24) im Abgasmodus arbeitet und der erste Sauerstoff-Brennstoff-Brenner (20) im brennstoffarmen Modus auf der Ablassseite arbeitet, und
der zweite Regenerator (26) im Feuerungsmodus und der zweite Sauerstoff-Brennstoff-Brenner (22) im brennstoffreichen Modus auf der Feuerungsseite arbeitet; und
Schnelles Durchlaufen der Betriebsarten des ersten und des zweiten Regenerators (24, 26) und des ersten und des zweiten Sauerstoff-Brennstoff-Brenners (20, 22) für aufeinander folgende Zeitintervalle, um zyklische Ströme zwischen dem ersten und zweiten Regenerator (24, 26) bereitzustellen.

13. Verfahren nach Anspruch 12, ferner umfassend das Bereitstellen einer Sauerstoff-Brennflamme aus mindestens einer von einer Krone und einer Seitenwand des Regenerativofens (10) zum Zusammenwirken mit mindestens einem von erstem und zweitem Regenerator (24, 26).

14. Verfahren nach Anspruch 12, wobei das Wechseln der Betriebsarten nach Ablauf eines Zeitintervalls, insbesondere von zehn Minuten bis dreißig Minuten, zum Beispiel von fünfzehn Minuten bis 25 Minuten, erfolgt.

15. Verfahren nach Anspruch 12, wobei das Betreiben des ersten Regenerators (24) und das Betreiben des zweiten Regenerators (26) gleichzeitig erfolgt.

## Revendications

1. Four à régénération à orifice terminal (10), comprenant :
- un boîtier ;
- une chambre de combustion (14) disposée dans le boîtier ;
- une extrémité de chargement associée à la chambre de combustion (14) ;
- un premier orifice (24A) et un deuxième orifice (26A) au niveau du boîtier pour communication avec la chambre de combustion (14) à l'extrémité de chargement ;
- une extrémité de déchargement associée à la chambre de combustion (14) et espacée de l'extrémité de chargement ;
- un premier régénérateur (24) disposé à l'extrémité de chargement et en communication avec la chambre de combustion (14) par l'intermédiaire du premier orifice (24A), le premier régénérateur (24) étant adapté pour fonctionnement cyclique entre un mode de cuisson dans lequel un combustible est injecté à proximité d'air de combustion préchauffé traversant le premier orifice (24A) dans la chambre de combustion (14), et un mode d'échappement dans lequel les produits de combustion sont évacués de la chambre de combustion (14) par le premier orifice (24A) ;
- un premier ensemble de brûleur à oxygaz (20) disposé entre les extrémités de chargement et de déchargement et adapté pour fonctionnement cyclique entre un mode riche en combustible et un mode pauvre en combustible concomitant avec le fonctionnement cyclique du premier régénérateur (24) ;
- un deuxième régénérateur (26) disposé à l'extrémité de chargement et en communication avec la chambre de combustion (14) par l'intermédiaire du deuxième orifice (26A), le deuxième régénérateur (26) étant adapté pour fonctionnement cyclique entre le mode de cuisson dans lequel un combustible est injecté à proximité d'air de combustion préchauffé traversant le deuxième orifice (26A) dans la chambre de combustion (14), et le mode d'échappement dans lequel les produits de combustion sont évacués depuis la chambre de combustion (14) par le deuxième orifice (26A) ; et
- un deuxième ensemble de brûleur à oxygaz (22) disposé entre les extrémités de chargement et de déchargement et adapté pour fonctionnement cyclique entre un mode riche en combustible et un mode pauvre en combustible concomitant avec le fonctionnement cyclique du deuxième régénérateur (26) ;
dans lequel
- le premier ensemble de brûleur à oxygaz (20) est actionnable dans un mode riche en combustible sur un côté cuisson du four (10), ledit mode riche en combustible étant concomitant avec le mode de cuisson du premier régénérateur (24) pendant un intervalle de temps pour produire une combustion riche en combustible et un flux de produit de combustion riche en combustible dans la chambre de combustion (14), et
- le deuxième ensemble de brûleur à oxygaz (22) est actionnable dans un mode pauvre en combustible sur un côté échappement du four (10), ledit mode pauvre en combustible étant concomitant avec le mode d'échappement du deuxième régénérateur (26) pendant l'intervalle de temps pour fournir de l'oxygène supplémentaire pour réagir avec le flux de produit de combustion riche en combustible et former un flux d'échappement provenant de la chambre de combustion (14) ;
après ledit intervalle de temps
- le premier ensemble de brûleur à oxygaz (20) est actionnable dans le mode pauvre en combustible du côté échappement et le premier régénérateur (24) est actionnable dans le mode d'échappement, et
- le deuxième ensemble de brûleur à oxygaz (22) est actionnable dans le mode riche en combustible du côté cuisson et le deuxième régénérateur (26) est actionnable dans le mode de cuisson pendant un autre intervalle de temps pour inverser le flux de combustion et le flux d'échappement dans la chambre de combustion (14) pour cyclage entre les premier et deuxième régénérateurs (24, 26) .

2. Four à régénération selon la revendication 1, dans lequel le premier ensemble de brûleur à oxygaz (20) et le deuxième ensemble de brûleur à oxygaz (22) sont chacun disposés au niveau de parois latérales opposées du boîtier.

3. Four à régénération selon la revendication 1, dans lequel le premier ensemble de brûleur à oxygaz (20) et le deuxième ensemble de brûleur à oxygaz (22) sont chacun disposés dans une couronne du boîtier.

4. Four à régénération selon la revendication 1, dans lequel le premier ensemble de brûleur à oxygaz (20) et le deuxième ensemble de brûleur à oxygaz (22) sont chacun disposés à l'extrémité de déchargement de la chambre de combustion (14).

5. Four à régénération selon la revendication 1, dans lequel le premier ensemble de brûleur à oxygaz comprend une pluralité de premiers brûleurs à oxygaz (20) disposés le long d'un premier côté du boîtier pour fonctionnement dans la chambre de combustion (14).

6. Four à régénération selon la revendication 5, dans lequel le deuxième ensemble de brûleur à oxygaz comprend une pluralité de deuxièmes brûleurs à oxygaz (22) disposés sur un côté opposé du boîtier pour fonctionnement dans la chambre de combustion (14).

7. Four à régénération selon la revendication 1, dans lequel le premier ensemble de brûleur à oxygaz comprend au moins un premier brûleur à oxygaz (20) disposé dans au moins une couronne du boîtier, une paroi latérale du boîtier, et l'extrémité de déchargement du boîtier de sorte que l'un quelconque desdits premiers brûleurs à oxygaz (20) brûle dans la chambre de combustion (14) du boîtier.

8. Four à régénération selon la revendication 7, dans lequel le deuxième ensemble de brûleur à oxygaz comprend au moins un deuxième brûleur à oxygaz (22) disposé dans au moins la couronne du boîtier, la paroi latérale du boîtier, et l'extrémité de déchargement du boîtier de sorte que l'un quelconque desdits deuxièmes brûleurs à oxygaz (22) brûle dans la chambre de combustion (14) du boîtier.

9. Four à régénération selon la revendication 1, dans lequel le premier régénérateur (24) fonctionne dans le mode de cuisson, et le deuxième régénérateur (26) fonctionne dans le mode d'échappement pendant l'intervalle de temps de dix minutes à trente minutes, en particulier de quinze minutes à 25 minutes.

10. Four à régénération selon la revendication 9, dans lequel le deuxième régénérateur (26) fonctionne dans le mode de cuisson, et le premier régénérateur (24) fonctionne dans le mode d'échappement pendant l'autre intervalle de temps de dix minutes à trente minutes, en particulier de quinze minutes à 25 minutes.

11. Four à régénération selon la revendication 1, dans lequel le premier régénérateur (24) et le deuxième régénérateur (26) sont adaptés pour alterner séquentiellement entre les modes de cuisson et d'échappement.

12. Procédé de fonctionnement d'un four à régénération à orifice terminal (10) comprenant un côté cuisson et un côté échappement, ledit four (10) comportant des premier et deuxième régénérateurs (24, 26) dont chacun est actionnable dans un mode de cuisson et un mode d'échappement, le procédé comprenant :
la fourniture d'un premier brûleur à oxygaz (20) adapté pour fonctionner dans un mode riche en combustible et un mode pauvre en combustible concomitant avec le mode actionnable du premier régénérateur (24) ;
- la fourniture d'un deuxième brûleur à oxygaz (22) adapté pour fonctionner dans un mode riche en combustible et un mode pauvre en combustible concomitant avec le mode actionnable du deuxième régénérateur (26) ;
- l'actionnement du premier régénérateur (24) dans le mode de cuisson et du premier brûleur à oxygaz (20) dans le mode riche en combustible du côté cuisson ;
- l'actionnement du deuxième régénérateur (26) dans le mode d'échappement et du deuxième brûleur à oxygaz (22) dans le mode pauvre en combustible du côté échappement ;
- l'alternance des modes actionnables des premier et deuxième régénérateurs (24, 26) et des premier et deuxième brûleurs à oxygaz (20, 22), dans lequel
- le premier régénérateur (24) fonctionne dans le mode d'échappement et le premier brûleur à oxygaz (20) fonctionne dans le mode pauvre en combustible du côté échappement, et
- le deuxième régénérateur (26) fonctionne dans le mode de cuisson et le deuxième brûleur à oxygaz (22) fonctionne dans le mode riche en combustible du côté cuisson ; et
- le cyclage des modes actionnables des premier et deuxième régénérateurs (24, 26) et des premier et deuxième brûleurs à oxygaz (20, 22) pendant des intervalles de temps successifs pour produire des flux cycliques entre les premier et deuxième régénérateurs (24, 26).

13. Procédé selon la revendication 12, comprenant en outre la fourniture d'au moins une flamme de combustion d'oxygaz depuis au moins l'un d'une couronne et d'une paroi latérale du four à régénération (10) pour coopérer avec au moins l'un des premier et deuxième régénérateurs (24, 26).

14. Procédé selon la revendication 12, dans lequel l'alternance des modes de fonctionnement survient après qu'un intervalle de temps, en particulier de dix minutes à trente minutes, par exemple de quinze minutes à 25 minutes, se soit écoulé.

15. Procédé selon la revendication 12, dans lequel le fonctionnement du premier régénérateur (24) et le fonctionnement du deuxième régénérateur (26) surviennent simultanément.
